# EUROPÄISCHE PATENTSCHRIFT

(11) **EP 1 230 148 B1**
(45) Veröffentlichungstag und Bekanntmachung des Hinweises auf die Patenterteilung: **06.04.2005**
(21) Anmeldenummer: 00975919.2
(22) Anmeldetag: 26.10.2000
(51) Int. Cl.: C01B 15/023, B01J 8/02

(54) **VERFAHREN ZUR HERSTELLUNG VON WASSERSTOFFPEROXID**
METHOD FOR PRODUCING HYDROGEN PEROXIDE
PROCEDE POUR PRODUIRE DU PEROXYDE D'HYDROGENE

(30) Priorität: 05.11.1999 DE 19953185
(43) Veröffentlichungstag der Anmeldung: 14.08.2002
(73) Patentinhaber: Degussa AG, 40474 Düsseldorf (DE)
(72) Erfinder: HAAS, Thomas Dr., 60322 Frankfurt (DE); GLENNEBERG, Jürgen, 63065 Offenbach (DE); WAGNER, Rudolf, 63538 Grosskrotzenburg (DE); CREUTZ, Matthias, 60385 Frankfurt (DE); SAUER, Jörg, US-Mobile, Alabama 36695 (US); VANHEERTUM, Rudolf, BE-2930 Brasschaat (BE)
(86) Internationale Anmeldenummer: PCT/EP2000/010532
(87) Internationale Veröffentlichungsnummer: WO 2001/032557

(56) Entgegenhaltungen:
- EP-A- 0 384 905
- EP-A- 0 672 617
- EP-A- 0 999 181
- GB-A- 2 334 028
- US-A- 3 755 552

## Beschreibung

Die Erfindung richtet sich auf ein Verfahren zur Herstellung von Wasserstoffperoxid nach dem Anthrachinonprozeß, wobei die Hydrierstufe in einem Reaktor mit einem darin angeordneten Festbett aus teilchenförmigem Katalysator durchgeführt wird.

Es ist bekannt, Wasserstoffperoxid nach dem sogenannten Anthrachinonverfahren herzustellen. Dieser Prozeß basiert auf der alternierenden Hydrierung und Oxidation von Anthrachinonderivaten, üblicherweise 2-Alkylanthrachinonen und 2-Alkyltetrahydroanthrachinonen, wobei die Alkylgruppe linear oder verzweigt ist und im allgemeinen 2 bis 6 Kohlenstoffatome aufweist. Die genannten Anthrachinone sowie die in der Hydrierstufe erhaltenen Anthrahydrochinone werden nachfolgend allgemein als Reaktionsträger bezeichnet. Diese Reaktionsträger sind im Anthrachinonverfahren in einem organischen Lösungsmittelsystem gelöst, und die Lösung wird als Arbeitslösung bezeichnet. In der Hydrierstufe des Anthrachinonprozesses werden die Alkylanthrachinone und Alkyltetrahydroanthrachinone mit Wasserstoff in Gegenwart eines Katalysators in die entsprechenden Alkylanthrahydrochinone bzw. Alkyltetrahydroanthrachinone überführt. Es ist bekannt, die Hydrierstufe in Gegenwart eines Suspensionskatalysators, insbesondere eines edelmetallhaltigen Suspensionskatalysators, durchzuführen; alternativ hierzu ist es auch bekannt, die Arbeitslösung über einen in einem Hydrierreaktor angeordneten Festbettkatalysator zu leiten. Die die Hydrierstufe verlassende Arbeitslösung wird anschließend mit einem sauerstoffhaltigen Gas behandelt, wobei sich die Alkylanthrachinone bzw. Alkyltetrahydroanthrachinone zurückbilden und gleichzeitig Wasserstoffperoxid entsteht. An die Oxidation schließt sich ein Extraktionsschritt an, wobei Wasserstoffperoxid mit einer wässrigen Lösung extrahiert und diese Lösung anschließend gereinigt und konzentriert wird. Die Arbeitslösung wird wieder der Hydrierstufe zugeführt. Einen Überblick über das Anthrachinonverfahren zur Herstellung von Wasserstoffperoxid vermittelt Ullmann's Encyclopedia of Ind. Chem., 5^{th} ed., Vol. A 13, S. 447-456.

Bei einer Ausführungsform der Hydrierstufe werden Suspensionskatalysatoren, wie beispielsweise Palladium-Mohr, eingesetzt. Hierbei wird zwar ein hoher Umsatz erzielt und die Katalysatorregenerierung ist einfach, jedoch erfordert dieses Verfahren einen größeren technischen Aufwand, um vor der Oxidationsstufe den Katalysator von der Arbeitslösung abzutrennen. Nachteilig an diesem Verfahren ist auch, dass sich nur ein Teil des teueren Katalysators im eigentlichen Hydrierreaktor befindet, ein großer Teil jedoch im Umlauftank.

Die zuvor aufgezeigten Probleme lassen sich vermeiden, indem die Hydrierstufe unter Einsatz unterschiedlich ausgebildeter Festbettkatalysatoren durchgeführt wird. Im FMC-Verfahren gemäß Seite 453 des zuvor zitierten Ullmann-Dokuments enthält der Hydrierreaktor ein Katalysator-Festbett aus einem teilchenförmigen Katalysator. Die Arbeitslösung und Wasserstoff werden am oberen Ende des Katalysatorbetts aufgegeben und die hydrierte Lösung am unteren Ende abgezogen. Die optimale Querschnittsbelastung des Festbetts soll bei 12 bis 120 m³ Arbeitslösung pro m² und Stunde liegen. Es wurde festgestellt, dass die für einen wirtschaftlichen Betrieb erforderliche hohe Abriebbeständigkeit des Katalysators sowie eine ausreichende Standzeit desselben vielfach nicht erreicht werden, so dass auch bei dieser Festbetthydrierung die Anlage mit einer guten Filtrationsvorrichtung versehen werden muss, um die hydrierte Arbeitslösung von feinstem Abrieb des Katalysators zu befreien. Ein ähnliches Verfahren, wonach die Arbeitslösung und Wasserstoff vor der Aufgabe am Kopf des Hydrierreaktors mittels eines Static-Mixers gemischt werden, lehrt das US-Patent 4,428,922. Durch Abrieb des Katalysators wird auch die Standzeit gemindert. Die Standzeit des Festbettkatalysators hat einen hohen Einfluß auf die Wirtschaftlichkeit des Verfahrens, so dass ein hohes Interesse daran besteht, die Standzeit des Katalysators zu erhöhen.

Ein weiteres Verfahren, das die Hydrierstufe unter Verwendung eines Festbettkatalysators lehrt, ist aus der EP 0 672 617 A1 bekannt. Auch hier besteht das Katalysatorbett aus teilchenförmigen Partikeln, und die Arbeitslösung und Wasserstoff werden hier als schaumartiges Gemisch von oben nach unten durch das Katalysatorbett geleitet. Wesentlich an diesem Verfahren ist, dass die Geschwindigkeit an Arbeitslösung am Einlass sehr hoch ist, beispielsweise 2 bis 10 m/s, ausgedrückt als Volumenstrom pro Querschnittsfläche; im Katalysatorbett kann der auf den Querschnitt des Reaktors bezogene Volumenstrom niedriger sein, beispielsweise 5 bis 50 cm/s. Das eigentliche Katalysatorbett besteht aus Static-Mixer-Elementen, welche mit dem teilchenförmigen Katalysator gefüllt sind. Als nachteilig wird in diesem Verfahren angesehen, dass es durch die hohe Strömungsgeschwindigkeit (Querschnittsbelastung im eigentlichen Hydrierreaktor), welche in den Ausführungsbeispielen zwischen etwa 470 und 650 m/h beträgt, zu einem hohen Druckverlust kommt und damit der Energieaufwand steigt. Aufgrund der hohen mechanischen Belastung kommt es ferner leicht zu einem erhöhten Abrieb des Katalysators und damit Abfall der Produktivität. Schließlich ist die Reaktorkonstruktion an sich technisch recht aufwendig.

Eine andere Ausführungsform eines Katalysatorfestbetts besteht in einem Hydrierreaktor mit einer Honigwabenstruktur, wobei sich der Katalysator an den Wänden dieser Struktur befindet - beispielhaft wird auf das US-Patent 5,063,043 verwiesen. Dieses Dokument lehrt auch, dass die Produktivität bei einer Steigerung des Reaktorvolumens von 50 l auf 1000 l drastisch abnimmt, wenn die Arbeitslösung und Wasserstoff von unten nach oben durch den monolithförmigen Reaktor geleitet werden. Werden jedoch Arbeitslösung und Wasserstoff von oben nach unten durch die Kanäle des Monoliths geleitet, nimmt die Produktivität bei entsprechender Anlagevergrößerung nur geringfügig ab. Nachteilig an dem Hydrierverfahren unter Einsatz eines vertikalen monolithischen Festbettreaktors bei der Durchführung der Hydrierstufe im Anthrachinonverfahren ist das Problem der Katalysatorregenerierung - im allgemeinen muss das gesamte monolithische Element zerstört und durch ein neues mit aktivem Katalysator beschichtetes Element ersetzt werden.

Die Aufgabe der vorliegenden Erfindung besteht demgemäß darin, ein verbessertes Verfahren zur Durchführung der Hydrierstufe im Anthrachinonverfahren zur Herstellung von Wasserstoffperoxid aufzuzeigen, wobei die Hydrierung in einem Hydrierreaktor mit einem Festbettkatalysator erfolgt und die zuvor aufgezeigten Nachteile der vorbekannten Verfahren ganz oder in wesentlichem Umfang vermieden werden. Insbesondere sollte der Hydrierreaktor einen einfachen Aufbau aufweisen. Das erfindungsgemäße Verfahren sollte so betrieben werden können, dass eine möglichst hohe Standzeit des Katalysators resultiert und damit des Verfahren gegenüber dem nächstliegenden Stand der Technik eine verbesserte Wirtschaftlichkeit erzielt wird.

Die genannten Aufgaben sowie weitere, wie sie sich aus der nachfolgenden Beschreibung ergeben, lassen sich durch das erfindungsgemäße Verfahren lösen. Gefunden wurde ein Verfahren zur Herstellung von Wasserstoffperoxid nach dem Anthrachinonprozess, umfassend eine Hydrier- und eine Oxidationsstufe, wobei in der Hydrierstufe eine Anthrachinon-Reaktionsträger enthaltende Arbeitslösung und eine Wasserstoff enthaltende Gasphase bei einer Temperatur von 10 bis 100 °C und einem Druck von 0,1 bis 2 MPa über ein in einem Hydrierreaktor angeordnetes Festbett aus teilchenförmigem Katalysator geleitet werden, das dadurch gekennzeichnet ist, dass man den Hydrierreaktor als Blasensäule betreibt, indem ein Gemisch aus der Arbeitslösung und der Wasserstoff enthaltenden Gasphase von unten nach oben durch den Hydrierreaktor durchgeleitet wird. Die Unteransprüche richten sich auf bevorzugte Ausführungsformen des erfindungsgemäßen Verfahrens.

Es wurde gefunden, dass überraschenderweise die Standzeit des Katalysators nennenswert gesteigert werden kann, wenn das Gemisch aus Arbeitslösung und Wasserstoff oder Wasserstoff enthaltendem Gas entgegen der Lehre des Standes der Technik von unten nach oben durch das Katalysatorbett aus teilchenförmigem Katalysator geleitet werden. Es wurde gefunden, dass bei der vorbekannten Betriebsweise des Hydrierreaktors, wobei also die Arbeitslösung und Wasserstoff von oben nach unten durch das Katalysatorbett strömen, mit zunehmender Betriebsdauer die Aktivität absinkt. Demgegenüber kommt es bei der erfindungsgemäßen Betriebsweise von unten nach oben - es handelt sich um eine Blasenfahrweise - im wesentlichen zu keinem Aktivitätsabfall. Das bei der erfindungsgemäßen Fahrweise etwas geringere Anfangsniveau der Aktivität wird durch die Aufrechterhaltung derselben während langer Betriebszeit mehr als kompensiert. Damit führt das erfindungsgemäße Verfahren zu einer höheren Wirtschaftlichkeit.

Die EP 0 999 181 A1, welche nach dem Prioritätstag der vorliegenden Anmeldung publiziert wurde, richtet sich gleichfalls auf die Hydrierstufe des Anthrachinonverfahrens zur Herstellung von H₂O₂. Ein Gemisch aus Arbeitslösung und Hydriergas werden von unten nach oben durch ein Katalysatorfestbett geleitet. Die Leerrohrgeschwindigkeit der Arbeitslösung wird mit "im allgemeinen 0,02 bis 0,20 cm/s" (= 0,72 bis 7,2 m/h) angegeben. Wie nun gefunden wurde und die Beispiele 4 bis 6 der vorliegenden Erfindung zeigen, wird durch eine Erhöhung der Leerrohrgeschwindigkeit auf Werte von 8 bis 80 m/h, insbesondere 10 bis 50 m/h, eine unerwartet hohe Steigerung der Raum-Zeit-Ausbeute bewirkt.

Im erfindungsgemäßen Verfahren lassen sich die bekannten Reaktionsträger und bekannten Lösungsmittel für die Arbeitslösung verwenden.

Zweckmäßigerweise wird das Katalysatorfestbett aus einem teilchenförmigen Katalysator in einem vertikal ausgerichteten säulenförmigen Reaktor in an sich bekannter Weise angeordnet. Die Schüttung des Katalysatorbetts kann sich bodenseitig auf einem Netz oder einer feingelochten oder porösen Platte befinden. Zweckmäßigerweise wird auch die Oberseite des Katalysatorbetts so ausgestaltet, dass der teilchenförmige Katalysator nicht mit der Strömung aus dem Reaktor ausgetragen wird. Es wurde festgestellt, dass durch direktes Eindosieren von Wasserstoff in die Arbeitslösung und Einleiten des Gemischs am Boden des Hydrierreaktors eine gute Verteilung des Wasserstoff über den gesamten Kolonnenquerschnitt erzielt wird. Die Arbeitslösung und Wasserstoff müssen also nicht mittels spezieller Vorrichtungen, wie Static-Mixern, vorgemischt werden.

Der Hydrierreaktor kann mit für das Anthrachinonverfahren bekannten teilchenförmigen Katalysatoren befüllt werden. Besonders bevorzugt handelt es sich bei den Katalysatoren um edelmetallhaltige, insbesondere palladiumhaltige Trägerkatalysatoren. Geeignete Trägermaterialien sind insbesondere Kohlenstoff, Aluminiumoxid und Kieselsäure oder silikatische Materialien. Die Katalysatorpartikel können unterschiedliche Formen aufweisen, wie insbesondere Kugeln, körnige Granulate und Stäbchen. Der mittlere Durchmesser bzw. die mittlere größte Längenausdehnung.liegt im allgemeinen im Bereich von 0,1 bis 20 mm, vorzugsweise 0,5 bis 20 mm und insbesondere 1 bis 10 mm.

Bei der erfindungsgemäßen Betriebsweise des Hydrierreaktors wird die Arbeitslösung mit einer Leerrohrgeschwindigkeit (= Querschnittsbelastung) von 0,05 bis 100 m/h, inbesondere 8 bis 80 m/h und vorzugsweise 10 bis 50 m/h, durch das Katalysatorbett geführt. Die Flüssigkeitsbelastung LHSV (liquid hourly space velosity) kann, wie sich aus den Beispielen ergibt, in einem weiten Bereich liegen. Durch Steigerung der Reaktorhöhe kann die Flüssigkeitsbelastung erniedrigt werden, was sich auf den Umsatz günstig auswirken kann - eine Verdoppelung der Reaktorhöhe führt zu einer Halbierung des LHSV-Wertes.

Die Hydrierung wird in an sich bekannter Weise bei einer Temperatur im Bereich von 10 bis 100 °C, insbesondere 40 bis 60 °C und einem Druck von unter 2,0 MPa, insbesondere 0,2 bis 0,7 MPa durchgeführt. Gemäß einer bevorzugten Ausführungsform werden der Reaktor so dimensioniert und die Hydrierbedingungen so eingestellt, das der dem Reaktor zugeführte Wasserstoff bei seinem Weg durch das Katalysatorbett vollständig aufgebraucht wird.

Das erfindungsgemäße Verfahren zeichnet sich dadurch aus, das die Katalysatorstandzeit gegenüber der vorbekannten Betriebsweise signifikant erhöht ist. Zudem bedarf es keiner aufwendigen Konstruktion des Hydrierreaktors. Die niedrige Strömungsgeschwindigkeit im Katalysatorbett mindert zudem die Gefahr eines Abriebs und damit Absenkung der Produktivität und Standzeit. Die erfindungsgemäße Ausführungsform der Hydrierstufe ist nicht an eine bestimmte Zusammensetzung der Arbeitslöung und/oder die Hydriertemperatur und den Hydrierdruck gebunden.

Anhand der nachfolgenden Beispiele wird die Erfindung weiter verdeutlicht.

### Beispiele 1 und 2 sowie Vergleichsbeispiele 1 bis 3

Die Hydrierung wurde kontinuierlich in einem Reaktionsrohr mit 5 ml Reaktorvolumen durchgeführt. Die Katalysatorschütthöhe betrug 25 mm. Die Anlage bestand aus einer Flüssigkeitsvorlage, dem Reaktor und einem Flüssigkeitsabscheider. Die Reaktionstemperatur wurde über einen Wärmeträger-Öl-Kreislauf eingestellt. Druck und Wasserstoffstrom wurden elektronisch geregelt. Die Arbeitslösung wurde einem Wasserstoffstrom mit einer Pumpe zudosiert und das Gemisch bei der erfindungsgemäßen Fahrweise (Blasensäulen-Fahrweise) im Sumpf des Hydrierreaktors und bei der vorbekannten Fahrweise am Kopf des Reaktors (Rieselbett-Fahrweise) aufgegeben. Nach Durchlaufen des Reaktors wurde das Produkt in regelmäßigen Abständen aus dem Abscheider entnommen. Die Arbeitslösung auf der Basis von im wesentlichen Alkylaromaten und Tetrabutylharnstoff enthielt als Reaktionsträger 2-Ethyltetrahydroanthrachinon in einer Konzentration von 87,8 g/l und Ethylanthrachinon in einer Konzentration von 33 g/l. Der Reaktordruck betrug in allen Beispielen und Vergleichsbeispielen 0,5 MPa. Die Flüssigkeitsbelastung LHSV betrug in allen Fällen 4 h⁻¹ und die Reaktortemperatur 61 °C. Der dem Reaktor zugeführte Wasserstoffstrom betrug in allen Fällen 10 N1/h.

Als Katalysator wurde ein Trägerkatalysator eingesetzt, nämlich Palladium auf Al₂O₃ (SA 5151 Fa. Norton, Akron, Ohio); die mittlere Korngröße des granulatartigen Trägerkatalysators betrug 1 - 2 mm.

Für die Beladung des Trägers wurde eine wässrige Palladium-Nitrat-Lösung eingesetzt. 100 g des Trägermaterials wurden in einem Dragierkessel vorgelegt und im rotierenden Kessel mit einer Lösung aus 29 g Wasser und 0,22 g Palladium-Nitrat übergossen. Der beschichtete Träger wurde 16 h an Luft getrocknet, anschließend im Rohrofen auf 200 °C aufgeheizt. Anschließend wurde der Katalysator bei 200 °C 8 h mit Wasserstoff reduziert und dann dreimal mit jeweils 40 ml destilliertem Wasser gewaschen.

Die nachfolgende Tabelle 1 zeigt die Ergebnisse der erfindungsgemäßen Beispiele B 1 und B 2 sowie der Vergleichsbeispiele VB 1 bis VB 3.

**Tabelle 1**

| Nr. | Strömungsrichtung | Betriebszeit [h] | H₂O₂-Äquivalent [g/l] |
|---|---|---|---|
| VB 1 | abwärts | 16 | 7,3 |
| VB 2 | abwärts | 163 | 5,8 |
| VB 3 | abwärts | 281 | 4,8 |
| B 1 | aufwärts | 22 | 6,4 |
| B 2 | aufwärts | 214 | 6,4 |

Die Versuche zeigen, dass bei erfindungsgemäßer Ausführungsform bei der gewählten Betriebszeit das H₂O₂-Äquivalent konstant bleibt. Bei der vorbekannten Ausführungsform, also der Beschickung des Katalysatorbetts von oben (= Rieselbettfahrweise), wird zwar zu Beginn ein etwas höheres H₂O₂-Äquivalent erzielt, jedoch nimmt dieses während der Betriebszeit drastisch ab.

### Beispiele 3 bis 6 und Vergleichsbeispiel 4

Die Hydrierungen wurden analog zu Beispiel 1 durchgeführt, jedoch wurden ein höheres Katalysatorfestbett eingesetzt und die LHSV-Werte und damit die Leerrohrgeschwindigkeit der Arbeitslösung erhöht. Der Gasstrom wurde proportional zum Flüssigkeitsstrom erhöht. Tabelle 2 zeigt die Betriebsdaten und die Raum-Zeit-Ausbeute nach 6 h Betriebsdauer.

**Tabelle 2**

| Beispiel Nr. | Reaktor (Festbett) | | LHSV (h⁻¹) | Leerrohrgeschwindigkeit (m/h) | H₂O₂ - Äquival. (gH₂O₂ /1) | Raum-Zeit-Ausbeute (gH₂O₂/h·l Reaktor) |
|---|---|---|---|---|---|---|
| | Volumen (cm³) | Höhe (cm) | | | | |
| B 3 | 20 | 10 | 10 | 1 | 6,6 | 66 |
| B 4 | 80 | 40 | 25 | 10 | 6,8 | 170 |
| B 5 | 200 | 100 | 40 | 40 | 7,1 | 284 |
| B 6 | 200 | 100 | 80 | 80 | 3,1 | 248 |
| VB 4 | 200 | 100 | 160 | 160 | 0,8 | 128 |

Die Versuche zeigen, dass die höchsten Raum-Zeit-Ausbeuten bei einer Leerrohrgeschwindigkeit der Arbeitslösung von 10 bzw. 40 m/h erzielt werden - Beispiele 4 und 5.

Bei einer Leerrohrgeschwindigkeit von 80 m/h gemäß Beispiel 6 kam es zu einer Minderung der Produktivität und etwas Katalysatorabrieb.

Eine Leerrohrgeschwindigkeit von 160 m/h gemäß Vergleichsbeispiel 4 wirkt sich wegen des höheren Abriebs ungünstig auf die Katalysatorstandzeit und Raum-Zeit-Ausbeute aus.

## Patentansprüche

1. Verfahren zur Herstellung von Wasserstoffperoxid nach dem Anthrachinonprozess, umfassend eine Hydrier- und eine Oxidationsstufe, wobei in der Hydrierstufe eine Anthrachinon-Reaktionsträger enthaltende Arbeitslösung und eine Wasserstoff enthaltende Gasphase bei einer Temperatur von 10 bis 100 °C und unter einem Druck von 0,1 bis 2 MPa über ein in einem vertikal ausgerichteten säulenförmigen Hydrierreaktor angeordneten Festbett aus teilchenförmigem Katalysator geleitet werden,
**dadurch gekennzeichnet,**
**dass** man den Hydrierreaktor als Blasensäule betreibt, indem ein Gemisch aus der Arbeitslösung und der Wasserstoff enthaltenden Gasphase mit einer Leerrohrgeschwindigkeit der Arbeitslösung von 8 bis 100 m/h von unten nach oben durchgeleitet wird.

2. Verfahren nach Anspruch 1,
**dadurch gekennzeichnet,**
**dass** man den Reaktor mit einer Leerrohrgeschwindigkeit der Arbeitslösung im Bereich von 8 bis 80 m/h, insbesondere 10 bis 50 m/h, betreibt.

3. Verfahren nach einem der Ansprüche 1 bis 2,
**dadurch gekennzeichnet,**
**dass** man die Hydrierbedingungen und die Menge Wasserstoff derart einstellt, dass am Kopf des als Blasensäule betriebenen Reaktors im wesentlichen kein Wasserstoff mehr vorhanden ist.

4. Verfahren nach einem der Ansprüche 1 bis 3,
**dadurch gekennzeichnet,**
**dass** der Festbettkatalysator aus Partikeln mit einem mittleren Durchmesser von 0,5 bis 20 mm besteht.

5. Verfahren nach Anspruch 4,
**dadurch gekennzeichnet,**
**dass** der Festbettkatalysator ein edelmetallhaltiger, insbesondere Pd-haltiger Trägerkatalysator ist.

## Claims

1. Process for the preparation of hydrogen peroxide by the anthraquinone process, comprising a hydrogenation and an oxidation stage, wherein, in the hydrogenation stage, a working solution comprising an anthraquinone reaction carrier and a gas phase comprising hydrogen are passed over a fixed bed of particulate catalyst arranged in a vertically aligned columnar hydrogenation reactor at a temperature of 10 to 100 °C and under a pressure of 0.1 to 2 MPa,
**characterized in that**
the hydrogenation reactor is operated as a bubble column, **in that** a mixture of the working solution and the gas phase comprising hydrogen with an empty tube speed of the working solution of 8 to 100 m/h is passed through from the bottom upwards.

2. Process according to claim 1,
**characterized in that**
the reactor is operated with an empty tube speed of the working solution in the range from 8 to 80 m/h, in particular 10 to 50 m/h.

3. Process according to one of claims 1 to 2,
**characterized in that**
the hydrogenation conditions and the amount of hydrogen are established such that substantially no further hydrogen is present at the top of the reactor operated as a bubble column.

4. Process according to one of claims 1 to 3,
**characterized in that**
the fixed bed catalyst comprises particles with an average diameter of 0.5 to 20 mm.

5. Process according to claim 4,
**characterized in that**
the fixed bed catalyst is a supported catalyst comprising a noble metal, in particular comprising Pd.

## Revendications

1. Procédé pour produire du peroxyde d'hydrogène faisant appel à l'anthraquinone, comprenant une étape d'hydrogénation et une étape d'oxydation, selon lequel, dans l'étape d'hydrogénation, on conduit une solution de travail contenant un support de réaction anthraquinone et une phase gazeuse contenant de l'hydrogène à une température de 10 à 100°C et sous une pression de 0,1 à 2 MPa sur un lit solide de catalyseur particulaire placé dans un réacteur d'hydrogénation en forme de colonne disposé verticalement,
**caractérisé en ce qu'**
on fait fonctionner le réacteur d'hydrogénation en colonne à bulles, en faisant passer de bas en haut un mélange de la solution de travail et de la phase gazeuse contenant de l'hydrogène, a une vitesse de la solution de travail dans le tube à vide de 8 à 100 m/h.

2. Procédé selon la revendication 1,
**caractérisé en ce qu'**
on fait fonctionner le réacteur avec une vitesse de la solution de travail dans le tube à vide comprise entre 8 et 80 m/h, en particulier entre 10 et 50 m/h.

3. Procédé selon l'une des revendications 1 à 2,
**caractérisé en ce qu'**
on règle les conditions d'hydrogénation et la quantité d'hydrogène de manière qu'à la tête du réacteur fonctionnant en colonne à bulles il ne se trouve pratiquement plus d'hydrogène.

4. Procédé selon l'une des revendications 1 à 3,
**caractérisé en ce que**
le catalyseur en lit fixe se compose de particules ayant un diamètre moyen de 0,5 à 20 mm.

5. Procédé selon la revendication 4,
**caractérisé en ce que**
le catalyseur en lit fixe est un catalyseur à support contenant un métal noble, en particulier contenant du Pd.
